Europäisches Patentamt

European Patent Office

Office européen des brevets

(19)

(11) Numéro de publication: **0 176 425**

**A1**

(12)

# DEMANDE DE BREVET EUROPEEN

(21) Numéro de dépôt: **85401761.3**

(22) Date de dépôt: **10.09.85**

(51) Int. Cl.⁴: **H 02 M 7/515**
**H 01 T 23/00**

(30) Priorité: **12.09.84 FR 8414014**

(43) Date de publication de la demande:
**02.04.86 Bulletin 86/14**

(84) Etats contractants désignés:
**DE GB**

(71) Demandeur: **TRAILIGAZ**
**29-31 boulevard de la Muette**
**F-95140 Garges-Les-Gonesse(FR)**

(72) Inventeur: **Chapsal, Paul**
**28 Rue de l'Agriculture**
**F-92700 Colombes(FR)**

(72) Inventeur: **Petitimbert, Jean-Francois**
**1 Allée des Accacias**
**F-95260 Mours(FR)**

(74) Mandataire: **Polus, Camille et al,**
**c/o Cabinet Lavoix 2, Place d'Estienne d'Orves**
**F-75441 Paris Cedex 09(FR)**

(54) **Dispositif de commutation forcée d'un onduleur et dispositif d'alimentation d'un ozoneur en comportant application.**

(57) L'invention se rapporte à un dispositif d'alimentation en énergie électrique d'un ozoneur à diélectrique, comprenant un redresseur triphasé (1) alimenté par le secteur, un premier moyen (2) de filtrage du signal de sortie du redresseur, un hacheur (3), un second moyen (4) de filtrage du signal de sortie du hacheur (3) et un onduleur (5) a commutation forcée commandé par le signal de sortie du hacheur (3) filtré par le second moyen de filtrage (4). La charge (6) constituée par un transformateur d'alimentation (Ta) d'un ozoneur (oz) et de l'ozoneur (oz) lui-méme est branchée directement entre les points milieux de chaque branche de l'onduleur (5).

EP 0 176 425 A1

./...

Croydon Printing Company Ltd.

FIG.1

La présente invention se rapporte à l'alimentation en énergie électrique des ozoneurs et en particulier des ozoneurs à diélectrique.

Les ozoneurs à diélectrique comportent, en général, plusieurs éléments d'effluvation comprenant chacun deux électrodes séparées par un diélectrique. Le principe de fonctionnement d'un tel appareil est le suivant : un transformateur, dont le primaire est relié à une tension alternative et le secondaire à l'ozoneur, fournit une tension élevée aux éléments d'effluvation de l'ozoneur et lorsque la tension appliquée à l'ozoneur dépasse une tension déterminée dite tension de seuil, l'effluvation génératrice d'ozone se produit entre les deux électrodes. Si l'on se place au niveau des puissances mises en jeu lors du fonctionnement de l'ozoneur, on se rend compte que lorsque la tension d'alimentation de l'ozoneur est supérieure à la tension de seuil, la puissance qui transite est active, alors que lorsque la tension d'alimentation de l'ozoneur est inférieure à la tension de seuil, la puissance qui transite est réactive, ce qui a des conséquences néfastes sur le facteur de puissance et le rendement de l'installation.

Les solutions proposées, dans l'état de la technique, comportent des onduleurs à commutation forcée classiques permettant d'obtenir la tension alternative aux bornes du primaire du transformateur d'alimentation de l'ozoneur et des circuits LC ou des transformateurs à entrefer supplémentaires pour compenser les baisses du facteur de puissance et du rendement de l'installation. Mais ces solutions ne permettent pas d'obtenir le meilleur rapport performance - prix.

Le but de l'invention est de proposer un dispositif d'alimentation en énergie électrique d'un ozoneur dont le prix de revient demeure très compétitif tout en améliorant le facteur de puissance et le rendement de l'installation.

A cet effet, l'invention a pour objet un dispositif de commutation forcée d'un onduleur en pont destiné à l'alimentation d'un ozoneur, caractérisé en ce que la charge constituée d'un transformateur d'alimentation de l'ozoneur et de l'ozoneur lui-même est branchée directement entre les points milieux de chaque branche de l'onduleur et en ce que le rapport de transformation du transformateur de l'ozoneur est choisi pour permettre l'adaptation entre la valeur de la capacité équivalente de l'ozoneur et la valeur de la capacité de commutation imposée par les caractéristiques de commutation des thyristors de l'onduleur.

L'invention a également pour objet un dispositif d'alimentation en énergie électrique d'un ozoneur à diélectrique, caractérisé en ce qu'il comprend un redresseur triphasé alimenté par le secteur, un premier moyen de filtrage du signal de sortie du redresseur, un hacheur, un second moyen de filtrage du signal de sortie du hacheur et un onduleur à commutation forcée commandé par le signal de sortie du hacheur, filtré par le second moyen de filtrage.

L'invention va être décrite plus en détail ci-dessous en se référant aux dessins annexés, sur lesquels :

- la Fig.1 est un schéma général d'un circuit d'alimentation en énergie électrique d'un ozoneur à diélectrique selon l'invention;

- la Fig.2 est un schéma synoptique du hacheur entrant dans la construction de l'alimentation de la Fig.1;

- la Fig.3 est un chronogramme de signaux en un certain nombre de points du hacheur;

3                    0176425

- la Fig.4 représente l'allure du courant et de la tension aux bornes de l'ozoneur;

- la Fig.5 est un schéma équivalent d'un ozoneur à diélectrique;

- la Fig.6 est un schéma de l'onduleur faisant partie de l'alimentation de la Fig.1;

- la Fig.7 est un schéma de commande des thyristors d'extinction du hacheur;

- la Fig.8 est un schéma de commande des thyristors d'une diagonale de l'onduleur.

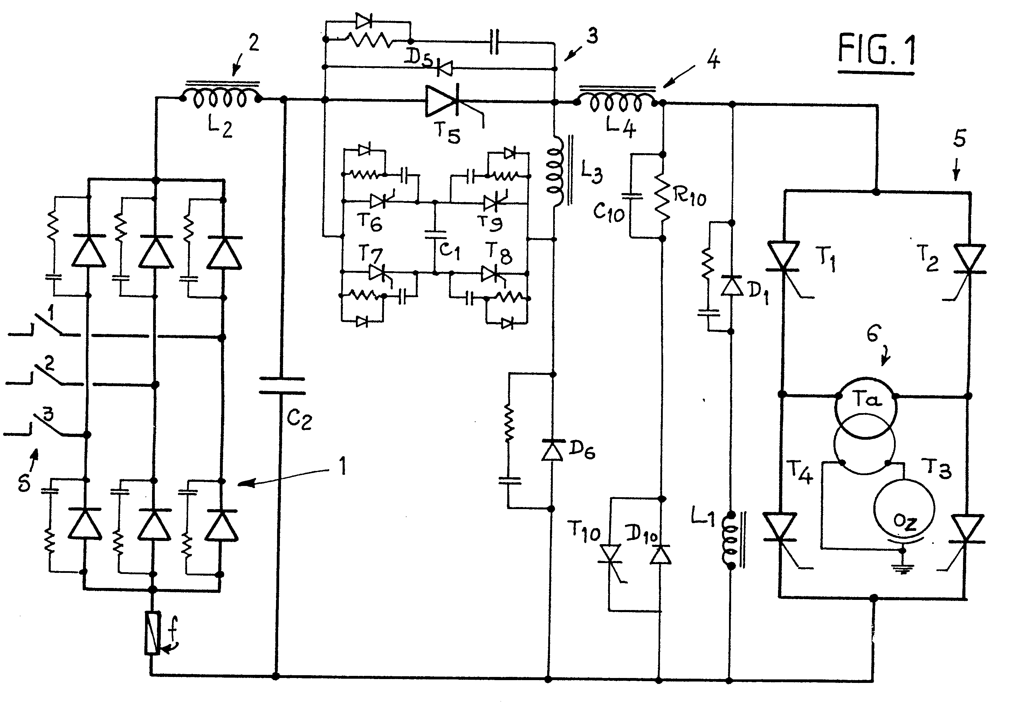

Le dispositif d'alimentation représenté à la Fig.1 comprend un redresseur triphasé 1, un premier moyen de filtrage 2, un hacheur 3, une inductance de lissage formant un second moyen de filtrage 4, un onduleur 5 et une charge 6 constituée par un transformateur d'alimentation (Ta) et un ozoneur (Oz).

Le redresseur 1 est constitué par un pont à six diodes muni d'organes de protection classiques (fusible f, sectionneur s, circuit RC). Ce pont à diodes redresse le réseau triphasé alternatif en une tension qui est ensuite filtrée par le moyen de filtrage 2 constitué d'une inductance L2 et d'une capacité C2 dont les caractéristiques sont déterminées de façon classique. Pour engendrer un courant faiblement ondulé la solution non limitative choisie est un hacheur 3, tout autre moyen pouvant être adopté. Le hacheur constitue un moyen de réglage, à très faibles pertes et à réponse très rapide des courants continus. De plus, comme le hacheur est alimenté par un pont de Graetz à diodes, le facteur de puissance est toujours excellent et égal à 0,95.

Le hacheur 3 est constitué par un thyristor principal T5 avec une diode D5 connectée tête-bêche et quatre petits thyristors d'extinction T6 et T9 montés en pont. L'inductance L3 et le condensateur C1 constituent le circuit d'extinction qui est fonction des caractéristiques du thyristor T5. Un circuit, comportant une résistance R10 en parallèle avec un condensateur C10 montés en série avec un thyristor T10 auquel est connecté tête-bêche une diode D10 constitue un circuit de démarrage, branché. en parallèle sur l'onduleur 5, permettant de charger le condensateur C1 du circuit d'extinction du thyristor T5 lors de la mise en route de l'installation.

L'amorçage du thyristor principal T5 assure la conduction du hacheur (interrupteur fermé). On bloque le hacheur (interrupteur ouvert) par l'amorçage de deux thyristors auxiliaires. Si après la phase d'amorçage le condensateur C1 est chargé, par exemple de manière que sa borne négative soit connectée à la jonction des thyristors T6 et T9, on amorce les thyristors T6 et T8, le condensateur C1 se décharge à travers l'inductance L3, sa tension est appliquée en inverse sur le thyristor T5 et son courant s'oppose à celui de ce thyristor jusqu'à l'éteindre puis passe dans la diode D5. Ensuite, le condensateur C1 se recharge de manière que son armature connectée aux thyristors T6 et T9 soit positive ; C1 est donc prêt pour la prochaine extinction qui s'opèrera par l'amorçage des thyristors T7 et T9.

Pendant la conduction du hacheur, la source du courant continu fournit le courant à l'inductance de lissage L4. Pendant le blocage du hacheur, la source de courant continu est déconnectée mais du courant continue de circuler dans l'inductance L4 via la diode de roue libre D6 et l'inductance L3. On verra plus loin que le hacheur fonctionne à une fréquence double de celle de l'onduleur de manière que le courant dans l'inductance L4 soit quasi-continu et que le rapport cyclique $\delta$ (rapport du temps de conduction du hacheur

sur la période de fonctionnement) permette de doser l'intensité que l'on désire pour l'alimentation de l'onduleur.

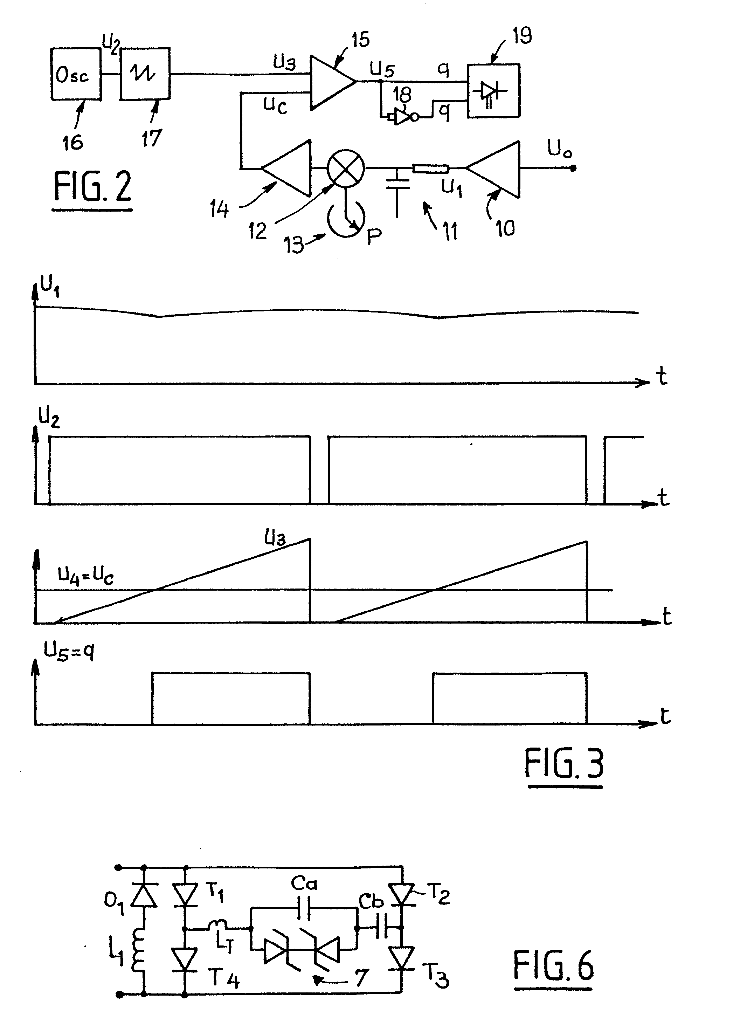

Le principe de la commande du hacheur est le même que celui des alimentations à découpage. Il s'agit de fournir cycliquement des signaux aux gâchettes du thyristor principal T5 et des thyristors d'extinction T6 à T9 de manière que le rapport de conduction du hacheur (thyristor principal T5) sur la période de hachage, encore appelé rapport cyclique $\delta$ soit toujours tel que le courant circulant dans l'inductance de lissage L4 soit égal à une valeur prédéterminée. Le rapport cyclique est établi par le circuit de la Fig.2.

Le hacheur qui vient d'être décrit peut naturellement être remplacé par tout dispositif de réglage automatique de puissance approprié tel qu'un dispositif de découpage de tension.

Le circuit de la Fig.2 comporte un premier amplificateur 10 dont l'entrée est reliée à une tension qui est l'image du courant circulant à la sortie du hacheur 3, la sortie (U1) de cet amplificateur est connectée à l'entrée d'un moyen de filtrage 11 dont la sortie est reliée à une entrée d'un comparateur 12 dont l'autre entrée est connectée à un potentiomètre 13 permettant de régler la valeur référence de l'intensité P désirée à la sortie du hacheur. La sortie de ce comparateur 12 est ensuite reliée à un amplificateur 14 dont la sortie est reliée à une entrée d'un comparateur 15 ; l'autre entrée de ce comparateur 15 reçoit la sortie d'un générateur de rampe 17 dont l'entrée est reliée à un oscillateur 16 ; la sortie du comparateur 15 est reliée directement et par un inverseur 18 à un dispositif de commande classique 19 de la la gâchette des thyristors du hacheur.

La mesure du courant de sortie du hacheur (Uo), faite par tous moyens appropriés est amplifiée (U1), filtrée et comparée à la référence de courant P. L'erreur $\mathcal{E}$ entre la mesure et la référence est amplifiée et sert de tension de commande UC p:ur la détermination du rapport cyclique $\delta$ , ce dernier étant obtenu en comparant une dent de scie (U3) avec la tension de commande (Uc). Le chronogramme des signaux de la commande du hacheur est représenté à la Fig.3.

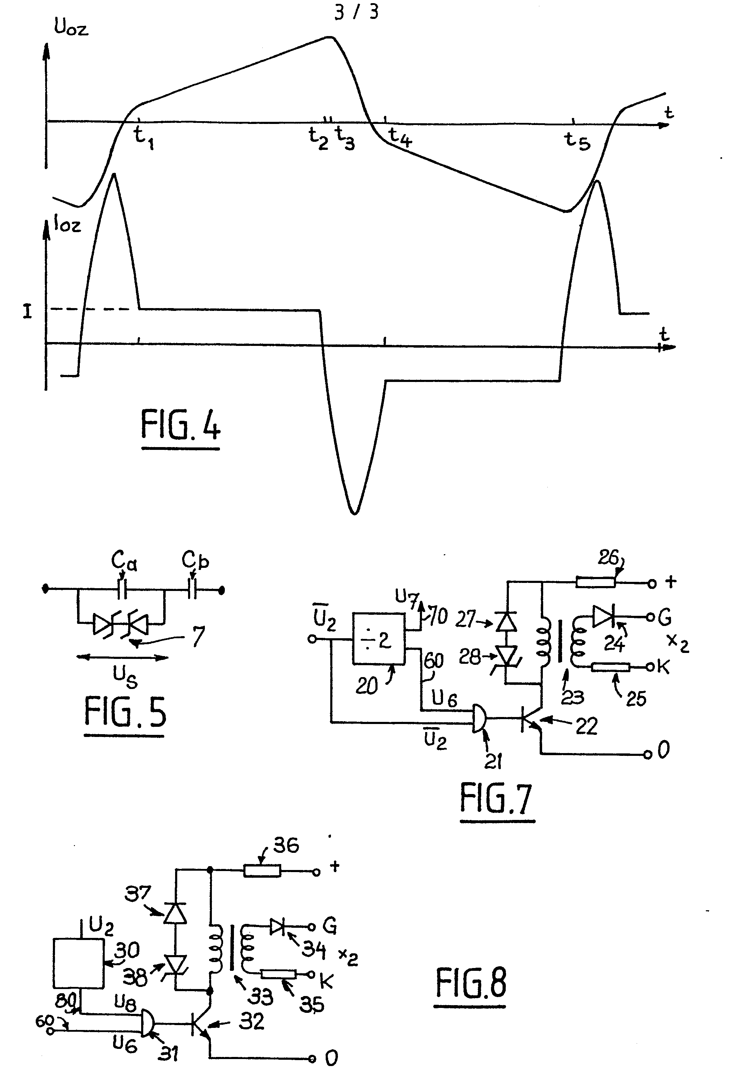

L'onduleur, placé après l'inductance de lissage L4, est constitué de quatre thyristors T1 à T4 montés en pont (Fig.1). La charge est constituée par le transformateur Ta d'alimentation de l'ozoneur et l'ozoneur Oz lui-même. Les bornes du primaire du transformateur d'alimentation sont reliées directement aux points milieux de chaque branche de l'onduleur. La tension et le courant de sortie de l'onduleur sont représentés à la Fig.4. On y reviendra lors de la description du fonctionnement de l'onduleur.

L'ozoneur à diélectrique peut être représenté sous la forme d'un schéma équivalent (Fig.5) comprenant deux condensateurs en série Ca (condensateur à air) et Cb (condensateur à verre) dont le premier est shunté par un écrêteur de tension 7 formé de deux diodes Zener en opposition, la tension d'écrêtage étant la tension de seuil (US) de l'ozoneur.

Si l'on applique cette caractéristique au schéma de l'onduleur représenté à la Fig.6, le schéma équivalent de l'ozoneur comportant les deux condensateurs Ca et Cb et l'écrêteur de tension 7 se retrouve donc, au rapport de transformation du transformateur d'alimentation de l'ozoneur près, en série avec une inductance LT, connecté entre les points milieux de chaque branche de l'onduleur. L'inductance LT qui est l'inductance de commutation est constituée en tout ou partie, suivant la taille du transformateur, par l'inductance de fuite du transformateur d'alimentation. Ceci constitue le circuit d'extinction des thyristors. En effet, tant que la tension d'alimentation de l'ozoneur est inférieure à sa tension de seuil on peut considérer que l'ozoneur est constitué par les deux condensateurs Ca et Cb en série et lorsque la tension d'alimentation est supérieure à la tension de seuil, le premier condensateur Ca est shunté par l'écrêteur de tension 7.

Ainsi le dispositif de commutation selon l'invention utilise les caractéristiques de la charge comportant un transformateur et l'ozoneur.

Le rôle de l'inductance de commutation est de limiter le dI/dt, dans les thyristors ; cette caractéristique est fixée par les thyristors, ce qui entraîne que la valeur de l'inductance de commutation LT, nécessaire pour limiter le DI/dt à une valeur compatible avec les thyristors, est imposée par ces mêmes thyristors. Le transformateur d'alimentation présente une inductance de fuite qui dépend de sa taille, ainsi selon la taille du transformateur et la valeur de l'inductance de commutation fixée par le dI/dt des thyristors, ladite inductance de commutation sera constituée, en tout ou partie, par ladite inductance de fuite du transformateur, selon sa taille.

La valeur de la capacité équivalente de l'ozoneur est fixée par les caractéristiques de l'ozoneur. La valeur du condensateur d'extinction dans un dispositif à commutation forcée est, quant à elle, fixée par les caractéristiques de commutation des thyristors. Il est donc nécessaire d'adapter la capacité équivalente de l'ozoneur à la valeur imposée par les caractéristiques des thyristors. Ceci est réalisé par le rapport de transformation du transformateur d'alimentation. On choisira un rapport de transformation tel que la capacité équivalente de l'ozoneur ramenée au primaire du transformateur, soit égale à la valeur de la capacité de commutation imposée par les caractéristiques des thyristors.

Un circuit comprenant une inductance L1 et une diode D1, en série, est branché en parallèle sur l'onduleur. Cette inductance L1 a pour rôle de limiter le courant pour le renversement de la tension aux bornes de la charge.

Le fonctionnement de l'onduleur selon l'invention est le fonctionnement classique d'un onduleur à commutation forcée avec la particularité que le circuit d'extinction est constitué par le transformateur d'alimentation et l'ozoneur lui-même. De plus, en raison même de sa structure l'onduleur est adapté pour fournir une pointe de courant afin de diminuer le temps de renversement de la tension où il n'y a pas de production d'ozone et où la puissance est réactive.

Les caractéristiques de courant et de tension de l'ozoneur sont représentées à la Fig.4. Pendant les intervalles à courant constant (t1 à t2) et (t4 à t5), deux thyristors en diagonale étant amorcés, par exemple T1 et T3, on charge le condensateur Cb de l'ozoneur à courant constant ; la tension aux bornes de Ca reste constante et égale à la tension de seuil Us. Pendant les intervalles de temps à courant sinusoïdal (t3 à t4), on renverse la tension des condensateurs Ca et Cb de l'ozoneur en amorçant les thyristors T2 et T4, ce qui a pour effet de bloquer les thyristors T1 et T3. Durant, l'intervalle (t2 à t3), où le courant décroît de I a O, Ub qui est la tension aux bornes du condensateur Cb de l'ozoneur, continue de croître et Ua, qui est la tension aux bornes du condensateur Ca de l'ozoneur, reste égale à la tension de seuil Us. L'intervalle (t2 à t4) correspond à la commutation des thyristors. C'est la capacité équivalente de l'ozoneur et l'inductance LT qui assurent cette commutation. A partir de t4, la commutation est terminée et les thyristors T2 et T4 assurent la conduction du courant I jusqu'à la prochaine commutation.

Comme il a été dit précédemment la fréquence de hachage est le double de celle de l'onduleur. A cet effet, le circuit de commande (Fig.7) des thyristors d'extinction (T6 à T9) du hacheur 3 de la Fig.1 comporte un circuit 20 diviseur par deux dont l'entrée est destinée à recevoir le signal de sortie inversé de l'oscillateur 16 de la Fig.2. Les sorties 60 et 70 du circuit diviseur 20 commandent chacune deux thyristors en diagonale (T6, T8 ; T7, T9) du circuit d'extinction du hacheur 3 par l'intermédiaire de deux circuits identiques dont un seul est représenté à la Fig.7. La sortie 60 est reliée à une entrée d'une porte ET 21 dont l'autre entrée reçoit le signal U2 ; la sortie de cette porte est connectée à la base d'un transistor NPN 22 dont l'émetteur est relié au zéro de l'alimentation de la commande. Le collecteur de ce transistor 22 est relié à la sortie du primaire d'un transformateur d'impulsions 23 dont l'entrée est reliée à travers une résistance 26 à la borne positive de l'alimentation de la commande . Une diode 27 et une diode Zener 28 montées en opposition sont branchées en parallèle sur le primaire du transformateur d'impulsions 23, le secondaire du transformateur d'impulsions 23 est branché par l'intermédiaire d'une diode 24 à la gâchette desdits thyristors d'une diagonale et par l'intermédiaire d'une résistance 25 à la cathode desdits thyristors. Ainsi, on obtient l'amorçage des thyristors d'extinction d'une diagonale par la relation U2 . U6 à la sortie de la porte ET 21. Ceci déclenche le transistor 22 et engendre une impulsion sur la gâchette des thyristors par le transformateur d'impulsions 23. La commande de l'autre diagonale est assurée par la relation U2 . U7 (avec U7 égal à U6).

Le circuit de commande des thyristors d'une diagonale de l'onduleur (Fig.8) comporte une porte ET 31 dont une entrée est reliée à la sortie 60 du circuit diviseur 20 de la Fig.7 afin d'obtenir une commande de l'onduleur en phase avec celle du hacheur et dont l'autre entrée reçoit un signal U8 d'un circuit 30 dont l'entrée reçoit le signal U2. Ce circuit 30 divise la fréquence du signal de l'oscillateur U2 par deux et introduit un retard lié à la commutation du hacheur afin de permettre un meilleur fonctionnement. Ainsi, on obtient une fréquence de fonctionnement de l'onduleur 5 qui est la moitié de celle du hacheur 3. La sortie de la porte ET 31 est reliée à la base d'un transistor 32 dont le collecteur est relié au primaire d'un transformateur d'impulsions 33 qui est relié à la borne positive de la source d'alimentation par une résistance 36. L'émetteur du transistor 32 est relié au zéro de l'alimentation. Une diode 37 et une diode Zener 38 montées en opposition sont branchées en parallèle sur le primaire du transformateur d'impulsions 33. Le secondaire dudit transformateur d'impulsions est relié à la gâchette et à la cathode des thyristors d'une diagonale de l'onduleur par une diode 34 et une résistance 35 respectivement. L'amorçage des thyristors d'une diagonale de l'onduleur est ainsi obtenu
pour une fréquence de fonctionnement de l'onduleur qui
est la moitié de celle du hacheur, lesdites fréquences
étant en phase.

Le tableau ci-après donne à titre d'exemple
les valeurs des principaux composants du dispositif
d'alimentation pour une charge de 4 KVA.


## TABLEAU

Thyristors

_____

T1 à T5 : thyristors rapides

Par exemple SEMIKRON:   SKT 45F 10DX
            AEG    :   T 31F 900 BGC
            MEGAN  :   ST 073 S08 PD2K

T6 à T10 : thyristors normaux

Par exemple SEMIKRON:   SKT 10/08 C
            AEG    :   T 9,5 N800 BOF
            MEGAN      SC 10C 80


Diodes

_____

un pont triphasé de 6 diodes

Par exemple SEMIKRON:   3 Semipacks SKKL 40/12
            AEG    :   3 modules DD 31N 1200

D 1 : diode rapide

D5,D10,D6 : diodes rapides

Par exemple: SEMIKRON:   SKN 4F40/08
            AEG    :   D 21 S 1000

Refroidisseurs

Pour les 5 thyristors rapides et la diode rapide D1 : refroidisseur en convection naturelle de 1,2°C/W (K 1,1)
Pour les 5 thyristors normaux et les 3 diodes rapides (D5,D10,D6) : plaquettes de cuivre ou d'aluminium de 100x100mm ;
Pour le pont à diodes triphasé : refroidisseur à ventilation naturelle de 0,7°C/W.

Inductances

$L_2$ :  2,5 mH,     $I_{eff}$ = 10 A,     $I_{sat} > 25$ A

$L_4$ :  18 mH,     $I_{eff}$ = 20 A,     $I_{sat} > 22$ A

$L_1$ et $L_3$ :  sur ferrites

$L_1$ :  360 µH,     $I_{eff}$ = 11 A,     $I_{sat} > 50$ A

$L_3$ :  120 µH,     $I_{eff}$ = 15 A,     $I_{sat} > 100$ A

Condensateurs

$C_2$ :  500 V$=$, $> 36$ µF

$C_1$ :  500 V$\sim$,    4 µF

Transformateur pour ozoneur

Primaire : 284 V moyen, 20 A
Rapport de transformation : 32,55
fréquence : 400 Hz
Inductance de fuite idéale, vue du primaire : 20 µH
Equivalent en 50 Hz : 40 V/1300 V; 20 A/0,6 A.

13

Ainsi, le dispositif d'alimentation, du fait qu'il comprend le redresseur triphasé, le hacheur et l'onduleur dont la commutation forcée est assurée par la charge constituée du transformateur et de l'ozoneur, permet d'obtenir un très bon facteur de puissance et donc un très bon rendement et ceci pour un prix très compétitif.

## REVENDICATIONS

1. Dispositif de commutation forcée d'un onduleur à thyristors en pont destiné à l'alimentation d'un ozoneur (oz), caractérisé en ce que la charge constituée d'un transformateur d'alimentation (Ta) de l'ozoneur et de l'ozoneur (oz) lui-même est branchée directement entre les points milieux de chaque branche de l'onduleur (5), et en ce que le rapport de transformation du transformateur (Ta) de l'ozoneur est choisi pour permettre l'adaptation entre la valeur de la capacité équivalente de l'ozoneur et la valeur de la capacité de commutation imposée par les caractéristiques de commutation des thyristors de l'onduleur (5).

2. Dispositif de commutation selon la revendication 1, caractérisé en ce que l'inductance de commutation (LT) est constituée, en tout ou partie suivant la taille du transformateur (Ta) par l'inductance de fuite du transformateur (Ta).

3. Dispositif de commutation selon la revendication 1, caractérisé en ce que la capacité de commutation est constituée par la capacité équivalente de l'ozoneur (oz) ramenée au primaire du transformateur d'alimentation (Ta) de l'ozoneur (oz).

4. Dispositif d'alimentation en énergie électrique d'un ozoneur (oz) à diélectrique, caractérisé en ce qu'il comprend un redresseur triphasé (1) alimenté par le secteur, un premier moyen (2) de filtrage du signal de sortie du redresseur, un dispositif de réglage automatique de puissance (3), un second moyen (4) de filtrage du signal de sortie du dispositif de réglage automatique de puissance et un onduleur (5) à dispositif de commutation forcée suivant l'une des revendications 1 à 3, commandé par le signal de sortie du dispositif de réglage automatique de puissance (3) filtré par le second moyen de filtrage (4).

5. Dispositif d'alimentation selon la revendication 4, caractérisé en ce que la fréquence de fonctionnement du dispositif de réglage automatique de puissance (3) est double et synchronisée par rapport à la fréquence de l'onduleur (5).

6. Dispositif d'alimentation selon les revendications 4 ou 5, caractérisé en ce que le dispositif de réglage automatique de puissance (3) est un hacheur.

7. Dispositif d'alimentation selon la revendication 4, caractérisé en ce qu'il comprend un circuit, comportant une diode (D1) en série avec une inductance (L1), branché en parallèle sur l'onduleur (5).

FIG.1

0176425

2 / 3

FIG. 2

FIG. 3

FIG. 6

FIG.4

FIG.5

FIG.7

FIG.8

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | FR-A-2 273 759 (MITSUBISHI) <br> * Revendication 6; figure 8 * | 1-3,5 | H 02 M 7/515 <br> H 01 T 23/00 |
| Y | | 6,7 | |
| | --- | | |
| Y | EP-A-0 112 763 (THOMSON-CSF) <br> * Figure 1 * | 6 | |
| | --- | | |
| Y | DE-A-3 118 398 (BROWN BOVERI) <br> * Figure 2 * | 7 | |
| | ----- | | |

**DOMAINES TECHNIQUES RECHERCHES (Int Cl.4)**

H 02 M 7/00
H 01 T 23/00
A 61 N 1/00
H 02 M 5/00

Le présent rapport de recherche a été établi pour toutes les revendications

| Lieu de la recherche | Date d'achèvement de la recherche | Examinateur |
|---|---|---|
| LA HAYE | 16-12-1985 | BERTIN M.H.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82